(19) Europäisches Patentamt
European Patent Office
Office européen des brevets

(11) Veröffentlichungsnummer : **0 165 452**
**B1**

(12) # EUROPÄISCHE PATENTSCHRIFT

(45) Veröffentlichungstag der Patentschrift : **19.10.88**

(51) Int. Cl.⁴ : **C 08 F230/02**, C 11 D 3/37, C 11 D 3/00 // (C08F230/02, 220:06)

(21) Anmeldenummer : **85105815.6**

(22) Anmeldetag : **11.05.85**

(54) **Verfahren zur Herstellung von Mischpolymerisaten aus Vinylphosphonsäure und (Meth-)Acrylsäure in wässriger Lösung und ihre Verwendung.**

(30) Priorität : **18.05.84 DE 3418496**

(43) Veröffentlichungstag der Anmeldung : **27.12.85 Patentblatt 85/52**

(45) Bekanntmachung des Hinweises auf die Patenterteilung : **19.10.88 Patentblatt 88/42**

(84) Benannte Vertragsstaaten : **DE FR GB**

(56) Entgegenhaltungen :
**DE-A- 1 135 176**
**DE-A- 1 801 411**
**DE-B- 1 125 658**

(73) Patentinhaber : **HOECHST AKTIENGESELLSCHAFT**
**Postfach 80 03 20**
**D-6230 Frankfurt am Main 80 (DE)**

(72) Erfinder : **Dürsch, Walter, Dr.**
**In der Braubach 4**
**D-6240 Königstein/Taunus (DE)**
Erfinder : **Grosse, Jürgen, Dr.**
**Blankenheimer Weg 33**
**D-5042 Erftstadt-Liblar (DE)**
Erfinder : **Gohla, Werner**
**Rathausstrasse 73**
**D-5216 Niederkassel (DE)**
Erfinder : **Engelhardt, Friedrich, Dr.**
**Hünfelder Strasse 20**
**D-6000 Frankfurt am Main 61 (DE)**
Erfinder : **Riegel, Ulrich**
**Steinäckerstrasse 6**
**D-6000 Frankfurt am Main 61 (DE)**

**EP 0 165 452 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Mischpolymerisate aus Vinylphosphonsäure und Acrylsäure sind als Verdickungsmittel, Korrosionsschutz- und Oberflächenbehandlungsmittel von praktischem Interesse. Die Herstellung wasserlöslicher Mischpolymerisate aus Vinylphosphonsäure und Acrylsäure in Substanz und in organischen Lösungsmitteln wurde bereits beschrieben.

Bei der Polymerisation in Substanz nach Beispiel 1 der DE-AS 11 35 176 entstehen harte feste Massen, die nur sehr schwierig bearbeitet werden können. Bei der Verwendung organischer Lösungsmittel (Isopropanol), wie in Beispiel 3 der gleichen Schrift beschrieben, muß das Mischpolymerisat mit Hilfe anderer, hydrophoberer Lösungsmittel, wie z. B. Ethylacetat, ausgefällt und anschließend abgesaugt werden. Ähnlich umständlich gestalten sich Fällungspolymerisationen aus Ethylacetat (DE-OS 18 01 411). Eine mühsame Aufarbeitung der Lösungsmittel ist dabei nicht zu vermeiden. Außerdem wird unter diesen Versuchsbedingungen die eingesetzte Vinylphosphonsäure als vergleichsweise schwerer polymerisierendes Monomeres nur teilweise in das Polymerisat eingebaut. Bei der Nacharbeitung des Beispiels 3 der DE-AS 11 35 176 wurde z. B. festgestellt, daß gemäß $p^{31}$-NMR-Spektrum noch über die Hälfte der eingesetzten Vinylphosphonsäure als Monomeres vorlag. Wegen dieser großen Nachteile der bisherigen Verfahren ist die Herstellung von Mischpolymerisaten in Wasser als Lösungsmittel von großem wirtschaftlichem und ökologischem Interesse.

Es wurde nun überraschenderweise ein einfaches Verfahren zur Herstellung von Mischpolymerisaten aus Vinylphosphonsäure und (Meth-)acrylsäure gefunden, bei dem nur noch Restgehalte an Vinylphosphonsäure von weniger als 20 %, bevorzugt weniger als 12 %, resultieren. Dieses Verfahren besteht darin, daß man Vinylphosphonsäure und (Meth-)acrylsäure in Wasser auf Temperaturen von 40° bis 120 °C erhitzt in Gegenwart von 1 bis 5,5 Gew.-% an solchen aliphatischen Peroxiestern oder Diacylperoxiden, die bei Temperaturen unter 122 °C in einer Stunde zur Hälfte zerfallen, wobei die Gesamtmenge an Vinylphosphonsäure zusammen mit bis zu 30 Gew.-%, bezogen auf die gesamte Monomerenmenge, an (Meth-)acrylsäure vorgelegt und die übrige Menge an (Meth-)acrylsäure im Verlauf der Reaktion zugegeben wird.

Für das Verfahren sind Acrylsäure und Methacrylsäure geeignet, Acrylsäure ist bevorzugt. Die monomere Vinylphosphonsäure ist heute in technischem Maßstab auf zwei verschiedenen Wegen zugänglich.

1. Aufwendiges Verfahren (zur Herstellung reiner Vinylphosphonsäure).

Aus Phosphortrichlorid und Ethylenoxid wird Tris-(2-chlorethyl)-phosphit hergestellt, daraus entsteht durch Arbusov-Umlagerung u. a. der 2-Chlorethanphosphonsäure-bis(2-chlorethyl-ester). Nach Phosgenierung und thermischer Chlorwasserstoff-Abspaltung resultiert Vinylphosphonsäure-dichlorid, das, nach destillativer Reinigung, mit Wasser zu reiner Vinylphosphonsäure hydrolysiert wird.

Dieses Verfahren ist relativ aufwendig und wenig umweltfreundlich. Es müssen zunächst durch Phosgenierung Chloratome eingeführt werden, die später in Form von Chlorwasserstoff wieder entfernt werden müssen.

2. Umweltfreundliches halogenfreies Verfahren (zur Herstellung von « roher Vinylphosphonsäure » bzw. « esterhaltiger roher Vinylphosphonsäure »).

Der durch Umsetzung von Dimethylphosphit und Vinylacetat in über 90 %iger Ausbeute entstehende 2-Acetoxiethanphosphonsäuredimethylester wird gemäß DE-OS 30 01 894 bei 180-200 °C zu einem noch Methylgruppen enthaltenden « Pyrolysat », das u. a. auch verschiedene Pyro-vinylphosphonsäurederivate umfaßt, pyrolysiert. Daraus resultiert gemäß DE-OS 31 10 975 durch mehrstündige Einwirkung von Wasser bei Temperaturen über 100 °C eine preisgünstige « rohe Vinylphosphonsäure », die gemäß $p^{31}$-NMR-Spektrogramm wie folgt zusammengesetzt ist : (« % » bedeutet hierbei Prozente bezogen jeweils auf die Gesamtfläche aller $p^{31}$-Resonanz-Signale)

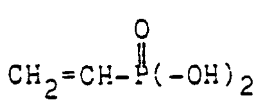

66-75 %

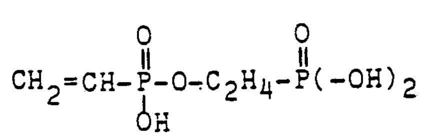

2-13 %

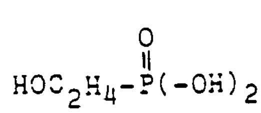

1-6 %

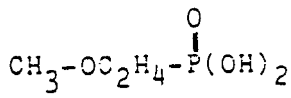

2-4 %

$H_3PO_4$ 6-10 %

Sonstige P-Verbindungen 3-10 %

Wegen ihrer besonderen Preisgünstigkeit ist die durch Zugabe von mindestens 2 % Wasser zu dem « Pyrolysat » bei Temperaturen unter 100 °C entstehende « esterhaltige rohe Vinylphosphonsäure » von besonderem praktischen Interesse.

Sie hat gemäß $P^{31}$-NMR-Spektrogramm folgende Zusammensetzung (in % vom Gesamt-P) : (Hierbei bedeutet R Wasserstoff oder Methyl)

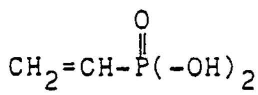

28-40 %

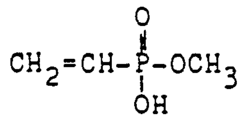

20-30 %

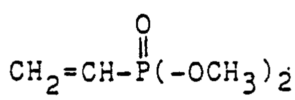

2-6 %

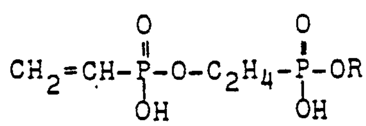

5-7 %

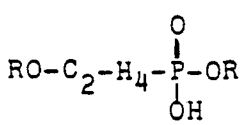

11-14 %

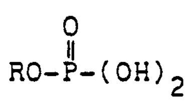

7-10 %

Sonstige P-Verbindungen 0-10 %

Für das erfindungsgemäße Verfahren sind sowohl die reine, als auch die nach dem umweltfreundlichen 2. Verfahren zugängliche « rohe » und die « esterhaltige rohe Vinylphosphonsäure » geeignet. Wird letztere verwendet, so entstehen Polyvinylphosphonsäuren, die z. T. noch Methylgruppen tragen.

Radikalische Polymerisationen verlaufen im allgemeinen umso besser, je reiner die Monomeren sind. Es war daher besonders überraschend, daß auch die « rohe » bzw. die « esterhaltige rohe Vinylphosphonsäure » unter den erfindungsgemäßen Bedingungen mischpolymerisiert werden kann, obwohl sie bereits 20-30 % an Verunreinigungen in Form verschiedener vinylgruppenfreier P-haltiger Säuren enthalten. Neben den sauren Verbindungen mit freien Säuregruppen können teilweise oder vollständig auch Natrium-, Kalium-, Ammonium- und auch Aminsalze verwendet werden.

Die Anwesenheit von ausreichenden Mengen Wasser ist bei dem erfindungsgemäßen Verfahren notwendig, damit die Reaktionsgemische rührbar und verarbeitbar bleiben.

Als Verdünnungsmittel anstelle von Wasser können auch die nach dem umweltfreundlichen 2. Herstellungsverfahren für Vinylphosphonsäure zwangsläufig anfallenden vinylgruppenfreien phosphorhaltigen sauren Substanzen betrachtet werden, die in der « rohen » bzw. in der « esterhaltigen rohen Vinylphosphonsäure » vorliegen. Sie vermögen das Wasser teilweise zu ersetzen.

Die Gesamtmengen an Verdünnungsmittel während der Polymerisation liegen bei 10-400 %, bevorzugt 20-300 %, bezogen auf die Gesamtmenge an Monomeren. Acrylsäure und Methacrylsäure polymerisieren schneller als Vinylphosphonsäure. Daher werden nur 0-30 % davon, bevorzugt 0-20 %, bezogen auf die Gesamtmonomerenmenge, zusammen mit der Vinylphosphonsäure vorgelegt und die Hauptmenge im Lauf der Reaktionszeit zugefügt.

Je mehr Wasser, vor allem schon zu Beginn, vorhanden ist, umso mehr Katalysator und umso längere Reaktionszeiten sind notwendig. Nach der Durchführung der Polymerisation können, z. B. zum Einstellen einer bestimmten Viskosität noch beliebig weitere Mengen an Verdünnungsmittel zugefügt werden.

Das Wasser zur Verdünnung wird diskontinuierlich oder kontinuierlich, getrennt oder im Gemisch mit Acrylsäure bzw. Methacrylsäure zugegeben in dem Maße, in dem die steigende Viskosität und auftretende Probleme mit der Durchmischung dies erforderlich machen.

Will man bevorzugt mit möglichst wenig Katalysator auskommen, so empfiehlt es sich, zu Beginn kein oder nur 5-30 % Wasser zuzugeben und insgesamt weitere 5-370 %, bevorzugt 15-270 %, kontinuierlich oder in etwa gleichen Portionen in dem Maße zuzufügen, in dem die Polymerisation fortschreitet und eine zu hohe Viskosität dies erforderlich macht.

Es empfiehlt sich, die Reaktionsgemische mit Inertgas zu überlagern. Unterbleibt die Inertgasüberlagerung, so können höhere Restmonomerengehalte resultieren und Verfärbungen auftreten.

An radikalisch wirkenden Katalysatoren sind solche geeignet, die

1. bereits unter 122 °C in einer Stunde bis zur Hälfte zerfallen und
2. den Verbindungsgruppen der aliphatischen Peroxiester und/oder aliphatischen Diacylperoxide angehören.

Andere bekannte Radikalstarter sind überraschenderweise ungeeignet, da sie entweder zu träge reagieren, wie z. B. Di-t-Butylperoxid, t-Butyl-peroxi-benzoat, oder Verfärbungen und/oder mit Wasser beim längeren Erhitzen unangenehme Gerüche und/oder zu hohe Restmonomeren-Gehalte von weit über 20 % ergeben, wie z. B. Kaliumpersulfat oder Dibenzoylperoxid, Azo-diisobutyronitril, etc. Von den geeigneten Peroxiverbindungen sind aus praktischen Gründen diejenigen weniger bevorzugt, die bereits unter ca. 80 °C in einer Stunde zur Hälfte zerfallen. Sie haben den Nachteil, daß sie wegen ihrer thermischen Empfindlichkeit z. B. schon nach der Herstellung mit Aliphaten verdünnt und bei Temperaturen unter 0 °C transportiert bzw. gelagert werden müssen. Von solchen Peroxiverbindungen seien genannt: Dimyristyl-peroxi-dicarbonat, Diisopropyl-peroxi-dicarbonat, t-Butyl-peroxineodecanoat, t-Amyl-peroxineodecanoat, t-Butyl-perpivalat, Bis-(3,5,5-trimethylhexanoyl-) peroxid.

Bevorzugt sind hingegen leicht handhabbare aliphatische Diacylperoxide oder Peroxiester, die zwischen 80° und 122 °C in einer Stunde höchstens zur Hälfte zerfallen, wie z. B. Didecanoylperoxid, Dilauroylperoxid, t-Butyl-peroxiisobutyrat, t-Butylperoxi-3,5,5-trimethyl-hexanoat, t-Butylperoxiacetat. Besonders bevorzugt ist t-Butyl-peroxi-2-ethyl-hexanoat, das bei 92 °C in einer Stunde zur Hälfte zerfällt. Es können auch Gemische der Katalysatoren verwendet werden.

Die notwendigen Gesamtmengen an Katalysatoren liegen bei 1,0 bis 5,5 %, bevorzugt 1,5-4,0 %. Wird weniger als 1,0 % Katalysator verwendet, so resultieren Vinylphosphonsäure-Restmonomerengehalte, die z. T. weit über 25 % liegen. Die notwendigen Katalysatormengen sind umso niedriger, je weniger Verdünnungsmittel zugegen ist.

Es ist nicht zweckmäßig, zu Beginn der Polymerisation die gesamte Menge an Katalysator zuzusetzen. Dieses Vorgehen führt bei den notwendigen hohen Monomerenkonzentrationen zu Beginn zu einer starken exothermen Reaktion und insgesamt zu relativ höheren Restmonomerengehalten. Es ist vielmehr bevorzugt, über mehrere Stunden hinweg eine möglichst gleichbleibende Konzentration an radikalabgebenden Molekülen aufrecht zu erhalten. Dies kann z. B. dadurch geschehen, daß, wenn die Reaktionstemperatur erreicht ist, zu Beginn der Polymerisation zunächst nur 0,1-1 %, bevorzugt 0,3 bis 0,8 % der Katalysatoren zugefügt und während der Reaktion insgesamt noch weitere 0,9-5,4 %, bevorzugt 1,2-3,9 %, der Katalysatoren kontinuierlich oder verteilt auf 1-24, bevorzugt 2-12, gleiche Portionen in etwa gleichen Zeitabständen nachgegeben werden. Nach Ende der Katalysatorzugabe muß noch 1 bis 10, bevorzugt 2-6 Stunden bei erhöhter Temperatur, zweckmäßigerweise der Reaktionstemperatur, nachgerührt werden.

Die Reaktionstemperaturen können zwischen 40 °C und 120 °C, bevorzugt 60°-110 °C liegen. Sie sind abhängig von der Zerfallshalbwertszeit des verwendeten Katalysators. Insbesondere geeignet sind Reaktionstemperaturen, die maximal ca. ± 25 °C, besonders bevorzugt ± 0 bis 10 °C, unterhalb bzw. oberhalb der Temperatur liegen, bei denen die Zerfallshalbwertszeit des verwendeten Katalysators eine Stunde beträgt.

Die geeigneten Reaktionszeiten sind in etwa umgekehrt proportional den Konzentrationen an monomerer Vinylphosphonsäure, den Konzentrationen an Katalysatoren und den Reaktionstemperaturen, die für den verwendeten Katalysator spezifisch sind. Sie liegen insgesamt, einschließlich der Nachrührzeit, zwischen 4 und 60 Stunden, bevorzugt zwischen 10 und 30 Stunden.

In den Endprodukten können die Gehalte an einpolymerisierter Vinylphosphonsäure bzw. an Rest-Vinylphosphonsäure durch $P^{31}$-NMR-Spektroskopie exakt ermittelt werden. Jodzahl-Bestimmungen geben Aufschluß über den Gesamt-Restmonomerengehalt. Feste Mischpolymere können sehr einfach durch Abziehen des Wassers im Vakuum erhalten werden.

Die nach dem oben beschriebenen Verfahren erhaltenen Mischpolymerisate werden als Gerüststoffadditive in Wasch- und Reinigungsmitteln eingesetzt.

Ein für den Wascherfolg von Wasch- und Reinigungsmitteln entscheidender Waschmittelinhaltsstoff ist das Pentanatriumtriphosphat, $Na_5P_3O_{10}$, technisch auch Natriumtripolyphosphat, NTPP genannt.

Die Verbindung verfügt über folgende wirksame Eigenschaften :

Komplexierung von Erdalkaliionen
selektive Adsorption an Grenzflächen von Textilsubstrat und Schmutz
Verstärkung der Wirkung von Anionentensiden
Dispergierung von Pigmentschmutz
Alkalische Reaktion
Pufferwirkung
« Threshold »-Wirkung
Gerüstsubstanz für Wasch- und Reinigungsmittel

Von besonderer Bedeutung für die Reinigungsleistung heutiger Waschmittel sind dabei das Calciumbindevermögen, die Dispergierwirkung sowie der « Threshold »-Effekt. Unter « Threshold »-Effekt versteht man die Eigenschaften einer Substanz, im unterstöchiometrischen Einsatz die Ausfällung von Härtebildnern zu verhindern bzw. zu verzögern.

Ein unerwünschter Nebeneffekt von NTPP ist, daß es — neben Phosphaten aus anderen Quellen wie Düngemitteln, Landwirtschaft, Fäkalien, Bodenerosion u. a. m. — zum Phosphoreintrag in die Gewässer beiträgt. Überhöhte Phosphatkonzentrationen, besonders in stehenden und langsam fließenden Gewässern können zu Eutrophierungserscheinungen führen.

Aus diesem Grund sucht man seit langem nach vergleichbar gut geeigneten Phosphatersatzstoffen. In verschiedenen Ländern wurden behördliche Schritte vorgenommen, um den Einsatz von NTPP in Wasch- und Reinigungsmitteln einzuschränken oder zu verbieten. In der Bundesrepublik führte beispielsweise die Phosphatreduzierung bei den Waschmitteln zu einer vergleichsweise schlechten Beurteilung des Gebrauchswertes, also zu schlechteren Waschmitteln. Insbesondere wurden erhöhte Gewebeinkrustierungen beobachtet: Zweifelsohne beeinträchtigt eine zu hohe Gewebeinkrustierung die Gebrauchseigenschaften des Waschgutes.

Es bestand also die Aufgabe, Zusatzstoffe zu finden, die die Wirkung des Gerüststoffsystems und damit die Waschwirkung des Waschmittels verbessern.

Es sind viele Substanzen als völliger oder teilweiser NTPP-Ersatz diskutiert worden, z. B. Zeolith A, Trinatriumtrilotriacetat, Natriumcitrat usw. Aus verschiedenen Gründen — z. T. ökologischen Bedenken, Wirtschaftlichkeit, nicht in jeder Beziehung ausreichende Leistungsfähigkeit — ist bisher keine Substanz gefunden worden, die sich als alleiniges NTPP-Substitut durchsetzen konnte. Vielmehr ist zunehmend die Meinung vertreten worden, daß Kombinationen von Gerüststoffen bzw. Gerüststoffadditiven optimale Leistungsfähigkeit erbringen können.

Als Gerüststoffadditive sind dabei Verbindungen zu bezeichnen, die in relativ kleinen Anwendungskonzentrationen merklichen Einfluß auf das Gerüststoffsystem ausüben. Dazu zählt man insbesondere Phosphonsäuren und polymere Carbonsäuren.

Diese polymeren Carbonsäuren können auf Basis folgender ethylenisch ungesättigten Monomeren hergestellt werden : (substituierte) Acrylsäuren, Maleinsäure (anhydrid), Acrolein, Glyoxylsäurealkylester, Chloracrylsäure, Vinylphosphonsäure. Dabei sind sowohl Homopolymerisate als auch z. T. Copolymerisate der genannten Monomeren bzw. weiterer geeigneter ungesättigter Verbindungen eingesetzt worden.

Geeignete Phosphonsäuren sind beispielsweise Aminomethylenphosphonsäuren sowie Hydroxiethandiphosphonsäure. Diese Verbindungen können wegen ihrer hohen Herstellungskosten nur im Konzentrationsbereich von etwa 1 % im Waschmittel eingesetzt werden.

Bei der Untersuchung des Einflusses von Gerüststoffadditiven werden synergistische oder antagonistische Effekte beobachtet, d. h., eine gegenseitige positive oder negative Beeinflussung der Waschmittelinhaltsstoffe. Dabei können z. B. polymere Carbonsäuren bzw. Phosphonsäuren in unterschiedlicher Weise auf z. B. NTPP- oder Zeolith A-haltige Waschmittelformulierungen einwirken. Die Verwendung von durch Fällungspolymerisation aus Ethylacetat hergestellten Copolymeren aus Acrylsäure/Vinylphosphonsäure als alleiniger Gerüststoff ist schon beschrieben worden. Diese Verwendung ist jedoch nicht wirtschaftlich gerechtfertigt. Es ist ebenfalls erwähnt worden, daß Vinylphosphonsäure als nicht maßgeblicher Bestandteil von Copolymeren in Wasch- und Reinigungsmitteln dienen kann.

Überraschenderweise wurde nun gefunden, daß Vinylphosphonsäure ein besonders geeignetes Monomer zur Herstellung hervorragender Gerüststoffadditive ist und die nach dem oben beschriebenen Verfahren hergestellten Copolymerisate eignen sich ausgezeichnet für diesen Zweck. Die Verwendung als Gerüststoffadditive ist aber nicht beschränkt auf die nach dem oben beschriebenen Verfahren hergestellten Copolymerisate, sondern auch solche Copolymerisate auf der Basis Vinylphosphonsäure/(Meth-)acrylsäure kommen für den genannten Zweck infrage, die nach anderen Verfahren hergestellt wurden.

All diese Copolymeren können auch bis zu 20 Mol% weitere olefinisch ungesättigte Comonomeren enthalten, wie beispielsweise Ethylen, Butadien, Chloropren, (Meth)acrylamid, Acrylamidosulfonsäure, Vinylsulfonsäure, Allylsulfonsäure, Vinylacetat, Vinylglykol, Hydroxyethylacrylat, Hydroxypropylacrylat oder (Meth)acrylsäuremethylester.

Die Vinylphosphonsäure/(Meth)acrylsäure-Copolymerisate haben folgende Vorteile :

sie zeichnen sich durch überragende inkrustierungsinhibierende Wirkung sowohl in Kombination mit NTPP als auch mit Zeolith A aus,

sind gegenüber Phosphonsäuren wirtschaftlicher herstellbar,

weisen deutlich höhere Calciumbindewerte als marktübliche polymere Carbonsäuren auf,

zeigen hervorragendes Dispergierverhalten und einen « Threshold »-Effekt, und haben somit vergrauungsinhibierende Wirkung,

vereinigen die Eigenschaften polymerer Carbonsäuren und Phosphonsäuren in einer Substanz.

Die Wasch- und Reinigungsmittel enthalten, sofern sie granuliert sind, bevorzugt 5-40 Gew.-% Tenside, 0,10-50 Gew.-% Gerüststoffe sowie Waschhilfsstoffe. Kommen sie flüssig in den Handel, so enthalten sie bevorzugt 10-55 Gew.-% Tenside, 0,1-30 Gew.-% Gerüststoffe neben Waschhilfsstoffen. Der Gehalt an Vinylphosphonsäure/(Meth)acrylsäure-Copolymerisaten beträgt in allen Fällen 0,05 bis 15 Gew.-%.

Die Tenside sind bevorzugt anionischer, zwitterionischer (ampholytischer) oder nichtionischer Natur. Unter anionischen Tensiden sind die wasserlöslichen Salze höherer Fettsäuren oder Harzsäuren, wie Natrium- oder Kaliumseifen von Kokos-, Palmkern- oder Rüböl sowie von Talg und Gemischen davon zu verstehen. Weiterhin zählen dazu höherer alkylsubstituierte, aromatische Sulfonate, wie Alkylbenzolsulfonate mit 9 bis 14 C-Atomen im Alkylrest, Alkylnaphthalinsulfonate, Alkyltoluolsulfonate, Alkylxylolsulfonate oder Alkylphenolsulfonate ; Fettalkoholsulfate ($R—CH_2—O—SO_3Na$ ; $R = C_{11-17}$) oder Fettalkoholethersulfate, wie Alkalilaurylsulfat oder Alkalihexadecylsulfat, Triethanolaminlaurylsulfat, Natrium- oder Kaliumoleylsulfat, Natrium- oder Kaliumsalze von mit 2 bis 6 Mol Ethylenoxid ethoxyliertem Laurylsulfat. Weitere geeignete anionische Tenside sind sekundäre lineare Alkansulfonate sowie α-Olefinsulfonate mit einer Kettenlänge von 12-20 C-Atomen.

Unter nichtionischen Tensiden sind solche Verbindungen zu verstehen, die eine organische, hydrophobe Gruppe sowie einen hydrophilen Rest aufweisen, z. B. die Kondensationsprodukte von Alkylphenolen oder höheren Fettalkoholen mit Ethylenoxid, die Kondensationsprodukte von Polypropylenglykol mit Ethylenoxid oder Propylenoxid, die Kondensationsprodukte von Ethylenoxid mit dem Reaktionsprodukt aus Ethylendiamin und Propylenoxid, sowie langkettige tertiäre Aminoxide etwa der Formel

$$C_{12}H_{25} - \overset{\displaystyle CH_3}{\underset{\displaystyle CH_3}{\overset{|}{\underset{|}{N}}}} = O$$

Schließlich umfassen Tenside mit zwitterionischem (ampholytischen) Charakter folgende Verbindungen : Derivate von aliphatischen, sekundären und tertiären Aminen oder quaternären Ammoniumverbindungen mit 8 bis 18 C-Atomen und einer hydrophilen Gruppe im aliphatischen Rest, wie z. B. Natrium-3-dodecylaminopropionat, Natrium-3-dodecylaminopropansulfonat, 3-(N,N-Dimethyl-N-hexyldecylamino)-propan-1-sulfonat oder Fettsäureaminoalkyl-N,N-dimethylacetobetain, wobei die Fettsäure 8 bis 18 C-Atome und der Alkylrest 1-3 C-Atome enthält.

Als Gerüstsubstanzen für die Waschmittel, die Copolymerisate, gemäß der Erfindung enthalten, eignen sich schwach sauer, neutral oder alkalisch reagierende anorganische oder organische Salze, insbesondere anorganische oder organische Komplexbildner.

Brauchbare, schwach sauer, neutral oder alkalisch reagierende Salze sind beispielsweise die Bicarbonate, Carbonate oder Silikate der Alkalien, weiterhin Mono-, Di- oder Trialkaliorthophosphate, Di- oder Tetraalkalipyrophosphate, als Komplexbildner bekannte Metaphosphate, Alkalisulfate sowie die Alkalisalze von organischen, nicht kapillaraktiven, 1 bis 8 C-Atome enthaltenden Sulfonsäuren, Carbonsäuren und Sulfocarbonsäuren. Hierzu gehören beispielsweise wasserlösliche Salze der Benzol-, Toluol- oder Xylolsulfonsäure, wasserlösliche Salze der Sulfoessigsäure, Sulfobenzoesäure oder Salze von Sulfodicarbonsäuren sowie die Salze der Essigsäure, Milchsäure, Zitronensäure, Weinsäure, Oxydiessigsäure ($HOOC—CH_2—O—CH_2—COOH$), Oxydibernsteinsäure, 1,2,3,4-Cyclopentatetracarbonsäure, Polyacrylsäure und Polymaleinsäure.

Als komplexbildende Gerüstsubstanzen eignen sich auch die schwach sauer reagierenden Metaphosphate sowie die alkalisch reagierenden Polyphosphate, insbesondere das Tripolyphosphat. Sie können ganz oder teilweise durch organische Komplexbildner ersetzt werden. Zu den organischen Komplexbildnern gehören beispielsweise Nitrilotriessigsäure, Ethylendiamintetraessigsäure, N-Hydroxyethylethylendiamintriessigsäure, Polyalkylen-polyamin-N-polycarbonsäuren und andere bekannte organische Komplexbildner, wobei auch Kombinationen verschiedener Komplexbildner eingesetzt werden können.

Waschhilfsstoffe für den Einsatz der Copolymeren gemäß der Erfindung umfassen Produkte wie die Alkali- oder Ammoniumsalze der Schwefelsäure, Kieselsäure, Kohlensäure, Borsäure, Alkylen-, Hydroxyalkylen- oder Aminoalkylenphosphonsäure sowie Bleichmittel, Stabilisatoren für Peroxidverbindungen (Bleichmittel) und wasserlösliche organische Komplexbildner.

Im einzelnen gehören zu den Bleichmitteln Natriumperboratmono- oder tetrahydrat, die Alkalisalze der Peroxomono- oder Peroxodischwefelsäure, die Alkalisalze der Peroxodiphosphorsäure ($H_4P_2O_8$). Als

Stabilisator für diese Bleichmittel fungiert z. B. wasserlösliches, gefälltes Magnesiumsilikat. Organische Komplexbildner sind die Alkalisalze der Iminodiessigsäure, Nitrilotriessigsäure, Ethylendiamintetraessigsäure, Methylendiphosphonsäure, 1-Hydroxyethan-1,1-diphosphonsäure und Nitrilotrismethylenphosphonsäure.

Waschhilfsstoffe, die das Schmutztragevermögen von Waschflotten erhöhen, wie Carboxymethylcellulose, Carboxymethylstärke, Methylcellulose oder Copolymere von Maleinsäureanhydrid mit Methylvinylether, Schaumregulatoren, wie Mono- und Dialkylphosphorsäureester mit 16 bis 20 C-Atomen im Alkylrest sowie optische Aufheller, Desinfizienzien und/oder proteolytische Enzyme können ebenfalls zusätzliche Bestandteile des Waschmittels sein.

Die Wasch- und Reinigungsmittel können in üblicher Weise durch Sprühtrocknen, Mischen, z. B. im Sprühnebelmischverfahren oder mittels anderer geeigneter Aggregate in Waschmittel eingearbeitet werden. Ein weiterer Vorteil der erfindungsgemäßen Gerüststoffadditive ist ihr Beitrag zum « anticaking », d. h. zur Verhinderung von Entmischungserscheinungen besonders bei Waschmittelslurries mit einem hohen Gehalt an nicht-ionischen Tensiden.

Die Erfindung wird durch die folgenden Herstellungs- und Anwendungsbeispiele erläutert. Hierbei ist zuvor folgendes zu bemerken :

Die in den Herstellungsbeispielen zur Polymerisation kommenden Arten von Vinylphosphonsäuren haben gemäß $P^{31}$-NMR-Spektren die unten angegebene Zusammensetzung. Die Prozentangaben beziehen sich auf Prozente Phosphor vom Gesamt-Phosphor. Sie stimmen mit den üblichen Gewichtsprozenten in etwa überein, da die jeweiligen Molmassen der einzelnen vorhandenen Phosphorverbindungen nur relativ wenig von einander abweichen.

R bedeutet bei den Säuren 2 und 3, H, bei dem Ester 4H oder $CH_3$ und X ist H oder $CH_3$.

| Säure-Nr. | Säure-Art |
|---|---|
| 1 | Reine Vinylphosphonsäure |
| 2 | Rohe Vinylphosphonsäure I |
| 3 | Rohe Vinylphosphonsäure II |
| 4 | Esterhalige rohe Vinylphosphonsäure |

| Säure-Art-Nr. | 1 | 2 | 3 | 4 |
|---|---|---|---|---|
| $CH_2=CH-P(O)(OH)_2$ | 100 | 66,8 | 66,5 | 30,8 |
| $CH_2=CH-P(O)(OH)(OCH_3)$ | 0 | 0 | 3,8 | 26,6 |
| $CH_2=CH-P-(O)(OCH_3)_2$ | 0 | 0 | 0 | 4,9 |
| $CH_2=CH-P(O)(OH)OC_2H_4P(O)(OH)(OR)$ | 0 | 12,6 | 5,8 | 6,5 |
| $XO-C_2H_4P(O)(OH)(OR)$ | 0 | 1,4 | 7,0 | 13,4 |
| $RO-P(O)(OH)_2$ | 0 | 8,7 | 7,0 | 8,9 |
| Unbekannte P-Verbindungen | 0 | 5,2 | 3,6 | 0,1 |

## Herstellungsbeispiele

### Beispiel 1 (Vergleich)

Die Mischung aus 54,0 g reiner Vinylphosphonsäure, 7,2 g Acrylsäure und 10 ml vollentsalztem Wasser wird mit Stickstoff überlagert und auf 90 °C erhitzt. Nach 30 Minuten werden 0,2 ml t-Butylperoxi-2-ethyl-hexanoat zugegeben und diese Katalysatorzugabe noch neun mal nach jeweils zwei weiteren Stunden wiederholt. Nach der letzten Katalysatorzugabe wird vier Stunden bei 90 °C nachgerührt.

Nach der vierten Katalysatorzugabe werden 10 ml Wasser, nach der neunten weitere 5 ml Wasser und am Ende des Nachrührens nochmals 20 ml Wasser zur Erhaltung der Rührbarkeit zugegeben. Es resultieren 103,6 g einer viskosen Lösung des Mischpolymeren mit einem Festkörpergehalt von 59,1 %. Gemäß $P^{31}$-NMR-Spektrum liegen nur noch 5,4 % P (pro Gesamt-Phosphor) in Form von freier Vinylphosphonsäure vor.

### Beispiel 2 (Vergleich)

Es wird gearbeitet wie im Beispiel 1. Es werden jedoch 43,2 g reine Vinylphosphonsäure und 14,4 g

Acrylsäure eingesetzt. Es werden nach der zweiten und siebten Katalysatorzugabe und nach dem Nachrühren jeweils 10 ml Wasser zugesetzt. Es resultieren 92 g einer viskosen Lösung des Mischpolymeren mit einem Festkörpergehalt von 62,6 %. Es liegen nur noch 7,1 % der Vinylphosphonsäure in freier unpolymerisierter Form vor.

Beispiel 3

10,8 g reine Vinylphosphonsäure und 10 g vollentsalztes Wasser werden unter Stickstoff auf 90 °C erhitzt. Nach 30 Minuten werden gleichzeitig 64,8 g Acrylsäure und 3 ml des Katalysators vom Beispiel 1 innerhalb von 6 Stunden langsam zugetropft. Bereits nach 50 Minuten ist die Zugabe von 20 ml Wasser notwendig. Es werden weitere 120 ml Wasser in Portionen von je 10 ml in etwa gleichen Zeitabständen zugefügt. Nach der Katalysatorzugabe wird 2 Stunden nachgerührt. Es ergeben sich 224,8 g einer viskosen Lösung des Mischpolymeren mit einem Feststoffgehalt von 33,6 %. Es liegen gemäß $P^{31}$-NMR-Spektrum nur noch 9,1 % der eingesetzten Vinylphosphonsäure als Monomeres vor.

Beispiel 4

Es wird gearbeitet wie im Beispiel 3 mit dem Unterschied, daß 21,6 g reine Vinylphosphonsäure zusammen mit 5 ml Wasser vorgelegt werden und nur 57,6 g Acrylsäure eingesetzt werden. Es müssen zur Erhaltung der Rührbarkeit des Ansatzes insgesamt neun mal je 10 ml Wasser zugefügt werden.
Ausbeute : 160,2 g.
Feststoffgehalt : 49,4 %
Nur noch 4,3 % der Vinylphosphonsäure sind nicht umgesetzt.

Beispiel 5

Es wird gearbeitet wie im Beispiel 3. Es werden jedoch 54 g reine Vinylphosphonsäure und 10 ml Wasser vorgelegt und nur 36,0 g Acrylsäure zugetropft. Es werden in den sechs Stunden Zutropfzeit viermal je 20 ml Wasser nachgesetzt.
Ausbeute : 180 g.
Feststoffgehalt : 50,0 %
Nur noch 16,0 % der Vinylphosphonsäure sind nicht umgesetzt.

Beispiel 6

Es wird wie im Beispiel 5 vorgegangen. Es werden jedoch statt 36,0 g Acrylsäure 43 g Methacrylsäure eingesetzt und während des Zutropfens viermal je 20 ml Wasser und nach dem Nachrühren nochmals 40 ml zugegeben. Es resultieren 219 g einer viskosen Lösung vom Feststoffgehalt 44,3 %. Nur noch 18,0 % der eingesetzten Vinylphosphonsäure liegen als Monomeres vor.

Beispiel 7

16,2 g rohe Vinylphosphonsäure I (enthaltend 10,8 g Vinylphosphonsäure rein) werden unter Stickstoff auf 90 °C erhitzt. Nach 30 Minuten werden gleichzeitig innerhalb von 6 Stunden 3 ml des Katalysators von Beispiel 1 und 64,8 g Acrylsäure zugetropft. Nach bereits 15 Minuten werden die ersten 10 ml Wasser zugefügt. Bis zum Ende des Zutropfens werden noch 12 mal je 10 ml Wasser in etwa gleichen Zeitabständen nachgesetzt. Es wird drei Stunden nachgerührt und mit Wasser auf 280 g aufgefüllt.

Die viskose Lösung enthält 27,0 % an größtenteils polymerisierten Monomeren. Es liegen gemäß $P^{31}$-NMR-Spektrum nur noch 1,2 % der Vinylphosphonsäure als Monomeres vor.

Beispiel 8

Es wird verfahren wie im Beispiel 7. Es werden jedoch 32,4 g rohe Vinylphosphonsäure (= 21,6 g rein) vorgelegt und nur 57,9 g Acrylsäure zugetropft. Es werden insgesamt 16 mal je 10 ml Wasser zugegeben, um den Ansatz rührbar zu halten. Nach dem Nachrühren wird mit Wasser auf 311 g aufgefüllt. In der viskosen Lösung liegen 25,6 % an größtenteils polymerisierten Monomeren vor. Nur 4,0 % der Vinylphosphonsäure sind nicht polymerisiert.

Beispiel 9

Es wird gemäß Beispiel 7 verfahren, aber 81 g rohe Vinylphosphonsäure (= 54 g reine Vinylphosphonsäure) vorgelegt und nur 36,0 g Acrylsäure zugetropft. Die Zutropfzeit wird auf 14 Stunden ausgedehnt. Es werden während der Zutropfzeit sechsmal je 10 ml Wasser zugegeben und nach dem Zutropfen

nochmals 30 ml. Es resultieren 218 g einer viskosen Lösung, die 41,3 % an größtenteils polymerisierten Monomeren enthält. Nur 9,3 % der Vinylphosphonsäure sind nicht polymerisiert.

Beispiel 10

236 g rohe Vinylphosphonsäure II (= 156,9 g rein) werden unter Stickstoff auf 85-90 °C erhitzt. Nach 30 Minuten wird die Mischung aus 463,2 g Acrylsäure und 960 ml vollentsalztem Wasser und gleichzeitig 24 ml des Katalysators vom Beispiel 1 in 12 Stunden zugetropft. Nach dem Zutropfen wird 2 Stunden nachgerührt. Es resultieren 1655,4 g einer viskosen Lösung, die 37,4 % an größtenteils polymerisierten Monomeren und 42,2 % an Feststoff enthält. Nur 1,2 % der eingesetzten Vinylphosphonsäure sind nicht polymerisiert.

Beispiel 11

Es wird gearbeitet wie bei Beispiel 10 mit dem einen Unterschied, daß 236 g esterhaltige rohe Vinylphosphonsäure Verwendung finden. Es resultieren 1 653,2 g einer viskosen Lösung, die 42,3 % an Feststoff enthält. Nur 1,9 % der eingesetzten Vinylphosphonsäurederivate sind nicht polymerisiert.

Anwendungsbeispiele

Erläuterung der Ausprüfmethoden

1. Calciumbindevermögen

Ermittelt wurde die Menge Komplexbildner in Form des bei pH 10 vorliegenden Natriumsalzes, die zum Wiederauflösen einer gegebenen Menge an frisch gefälltem $CaCO_3$-Niederschlag erforderlich ist. Diese Methode ist im Gegensatz z. B. zur Methode auf Basis der Calcium-sensitiven Elektrode auch bei erhöhter Temperatur einsetzbar. Bleibt die Lösung bei gleichen Mengenverhältnissen wie bei 20 °C auch bei 60 °C klar, so gilt der 20 °C-Wert auch für die erhöhte temperatur. Im allgemeinen nimmt das Kalkbindevermögen mit der Temperatur ab.

2. Dispergierverhalten

In einem Hartglasbecher werden in 100 ml Wasser von 23 °d, das mit Natronlauge auf pH 10 eingestellt war, 0,2 g des zu prüfenden Dispergiermittels vorgelegt und 0,5 Gew.-% Eisenoxid-Pigment (Bayferrox 130) zugegeben. Es wird 5 min bei 2 000 UpM mit einem Sägezahnrührer von 40 mm Scheibendurchmesser dispergiert. Der pH-Wert wird nochmal auf 10 nachgestellt. 30 ml der Dispersion werden in einen PVC-Becher gegeben, ein Filterpapierstreifen (mittel- bis weitporig, 90 g/m$^2$) eingehängt und die Flüssigkeitssäule 2 h lang aufsteigen gelassen. Je dem Grad des Mitwanderns des Pigments wird Benotung 1 (sehr gut), 2 (gut), 3 (mäßig), 4 (schlecht) vorgenommen.

3. « Threshold »-Test

Die Thresholdwirkung kann durch Streulichtmessung (TYNDALL-Effekt) sichtbar gemacht werden. Zur Messung eingesetzt werden $CaCO_3$-Trüben, die durch Vereinigen von 225 ml Wasser von 56 °d ($CaCl_2$-Härte) mit 25 ml $NaHCO_3$-Lösung (Molverhältnis $Ca^{2+}$ : $HCO^{-}_3$ = 1 : 1,15) in Gegenwart von 80 ppm Prüfsubstanz hergestellt werden. Bei Raumtemperatur wird dann mittels eines Streulichtphotometers der Trübungsverlauf verfolgt und beurteilt.

Die Beurteilung erfolgt nach folgender Notenskala :

Note
4 (schlecht) — Blindprobe
3 (mäßig) — deutliche Verringerung des Trübungsniveaus gegenüber Blindwert
2 (gut) — Auftreten der Trübung nach deutlicher Verzögerung bzw. stark reduzierte Trübung
1 (sehr gut) — keine Trübung innerhalb von 45 min.

Die Ergebnisse sind in Tabelle I wiedergegeben.

(Siehe Tabelle 1 Seite 10 f.)

Tabelle 1

| Anwendungsbeispiel | Herstellungsbeispiel | Monomer gemäß (a) | Monomer gemäß (b) | Molverhältnis a : b | Beispiel 1 Calciumbindevermögen (mg Ca/g Na-Salz) 20°C | 60°C | Beispiel 2 Dispergierverhalten Note | Beispiel 3 Thresholdtest Note |
|---|---|---|---|---|---|---|---|---|
| 1 | 7 | $CH_2=CHCOOH$ | $H_2C=CHPO_3H_2$ | 9 : 1 | 351 | 345 | 1 | 1 |
| 2 | 8 | $CH_2=CHCOOH$ | roh. | 8 : 2 | 385 | 294 | 1 | 1 |
| 3 | 10 | $CH_2=CHCOOH$ | | 8 : 2 | 435 | 435 | 1 | 1 |
| 4 | 3 | $CH_2=CHCOOH$ | $H_2C=CHPO_3H_2$ | 9 : 1 | 285 | n.b. | 1 | 1 |
| 5 | 4 | $CH_2=CHCOOH$ | rein | 8 : 2 | 263 | n.b. | 1 | 2 |
| 6 (Vergleich) | 2 | $CH_2=CHCOOH$ | | 3,3 : 6,7 | 206 | 206 | 1 | 1-2 |
| 7 (Vergleich) | 1 | $CH_2=CHCOOH$ | | 1,7 : 8,3 | 215 | 215 | 1 | 2-3 |
| z.Vgl. techn. Polyacrylat (M 100 000 - 150 000) | | | | | 300 | 276 | 2 | 1-2 |
| Ethylendiamintetra(methylenphosphonsäure) (EDTMP) | | | | | 290 | 290 | 1 | 1 |
| Copolymer Acrylsäure/Maleinsäure (techn.) | | | | | 260 | 240 | 1 | 1 |
| Hydroxiethandiphosphonsäure (HEDP) | | | | | 345 | 345 | 3 | 1 |

Anwendungsbeispiel 8 — Waschversuch

Verschiedene Testgewebe (Frottee, EMPA[1]-Baumwolle, WFK[2]-Baumwolle, WFK-Polyester/Baumwolle, Doppelripp) wurden mit unbeschmutzter Wäsche 20-mal bei 93 °C und 18 °d mit einem Versuchswaschmittel folgender Zusammensetzung gewaschen (Dosierung je 150 g Vor- und Hauptwäsche):

| | |
|---|---|
| Natriumtriphosphat | 22,0 % |
| Tenside | 14,5 % |
| Carboxymethylcellulose | 1,5 % |
| Ethylendiamintetraacetat | 0,2 % |
| optischer Aufheller | 0,2 % |
| Enzyme | 0,25 % |
| $NaBO_3 \cdot 4\ H_2O$ | 20,0 % |
| Na-Disilikat | 5,0 % |
| Mg-Silikat | 2,0 % |
| $Na_2SO_4$ | 34,35 % |

Anschließend wurde durch Veraschung bei 800 °C die anorganische Gewebeinkrustierung ermittelt. Durch Wiederholung des Versuches unter Zugabe von 1 % Copolymer gemäß Herstellungsbeispiel 10 bezogen auf die Waschmittelmenge konnte die anorganische Gewebeinkrustierung deutlich gesenkt werden (Tabelle 2). Der Effekt war je nach Gewebeart besser, mindestens jedoch vergleichbar dem Effekt der beim Einsatz von 1 % handelsüblicher polymerer Carbonsäuren (z. B. Polyacrylsäure technisch, M 100 000-150 000; technische Copolymere auf Basis Maleinsäure/Acrylsäure bzw. Methylvinylether/Maleinsäurehydrid) resultierte.

[1]) EMPA = Eidgenössische Materialprüfanstalt
[2]) WFK = Wäschereiforschung Krefeld

Tabelle 2: (% Asche nach 20 Waschzyklen, 93 °C, 18 °d)

| | Versuchswaschmittel | Versuchswaschmittel + 1% Copolymer entsprechend Herstellbeispiel 10 |
|---|---|---|
| | % Asche | % Asche |
| Frotteegewebe | 3,18 | 0,84 |
| EMPA-Baumwolle | 2,68 | 1,66 |
| WFK-Baumwolle | 1,78 | 0,73 |
| WFK-Polyester/Baumwolle | 1,10 | 0,32 |
| Doppelrippgewebe | 2,48 | 0,85 |

**Patentansprüche**

1. Verfahren zur Herstellung von Polymerisaten der Vinylphosphonsäure in Wasser mit Hilfe von radikalbildenden Katalysatoren, dadurch gekennzeichnet, daß man Vinylphosphonsäure und (Meth)acrylsäure in Wasser auf Temperaturen von 40° bis 120 °C erhitzt in Gegenwart von 1 bis 5,5 Gew.-% an solchen aliphatischen Peroxiestern und/oder Diacylperoxiden, die bei Temperaturen unter 122 °C in einer Stunde nur Hälfte zerfallen, wobei die Gesamtmenge an Vinylphosphonsäure zusammen mit bis zu 30 Gew.-%, bezogen auf die gesamte Monomerenmenge, an (Meth)acrylsäure vorgelegt und die Hauptmenge an (Meth)acrylsäure im Verlauf der Reaktion zugegeben wird.

2. Verfahren nach Anspruch 1, dadurch gekennzeichnet, daß man zu Beginn der Reaktion nur 0,1 bis 1 Gew.-% der Gesamtmenge des Katalysators und im Verlauf der Reaktion gleichmäßig weitere 0,9 bis 5,4 Gew.-% des Katalysators zugibt.

3. Verfahren nach Anspruch 1, dadurch gekennzeichnet, daß man in Gegenwart von aliphatischen Peroxiestern und/oder Diacylperoxiden arbeitet, die zwischen 80 °C und 121 °C in einer Stunde zur Hälfte zerfallen.

4. Verfahren nach Anspruch 1, dadurch gekennzeichnet, daß man Vinylphosphonsäure polymerisiert, die bis zu 30 Gew.-% an Phosphonsäuren und Phosphorsäure bzw. die Monomethylether dieser Säuren enthält.

5. Verwendung von Vinylphosphonsäure/(Meth)acrylsäure-Copolymerisaten hergestellt nach einem der vorhergehenden Ansprüche in Wasch- und Reinigungsmitteln.

## Claims

1. A process for the preparation of a polymer of vinylphosphonic acid in water with the aid of catalysts which form free radicals, which comprises heating vinylphosphonic acid and (meth)acrylic acid to temperatures of 40° to 120 °C in water in the presence of 1 to 5.5 % by weight of aliphatic peroxy esters and/or diacyl peroxides which dissociate by half in one hour at temperatures below 122 °C, the total amount of vinylphosphonic acid being taken together with up to 30 % by weight, based on the total amount of monomer, of (meth)acrylic acid and the main amount of the (meth)acrylic acid being added in the course of the reaction.

2. The process as claimed in claim 1, wherein only 0.1 to 1 % by weight of the total amount of the catalyst is added at the start of the reaction and a further 0.9 to 5.4 % by weight of the catalyst is uniformly added in the course of the reaction.

3. The process as claimed in claim 1, wherein the reaction is carried out in the presence of aliphatic peroxy esters and/or diacyl peroxides which dissociate by half in one hour between 80 °C and 121 °C.

4. The process as claimed in claim 1, wherein vinylphosphonic acid which contains up to 30 % by weight of phosphonic acids and phosphoric acid or the monomethyl ester of these acids is polymerized.

5. The use of a vinylphosphonic acid/(meth)acrylic acid copolymer, prepared as claimed in one of the preceding claims, in detergent and cleaning agents.

## Revendications

1. Procédé pour préparer des polymères de l'acide vinyl-phosphonique dans de l'eau, au moyen de catalyseurs radicalaires, procédé caractéristique en ce qu'on chauffe de l'acide vinyl-phosphonique et de l'acide acrylique ou méthacrylique dans de l'eau à des températures de 40 à 120 °C, en présence de 1 à 5,5 % en poids de peroxyesters et/ou de peroxydes de diacyles aliphatiques qui se décomposent à moitié en 1 heure à des températures inférieures à 122 °C, la quantité totale de l'acide vinyl-phosphonique avec une proportion de l'acide acrylique ou méthacrylique pouvant aller jusqu'à 30 % en poids, par rapport à la quantité totale des monomères, étant placée dès le départ dans le récipient et la quantité principale d'acide acrylique ou méthacrylique étant ajoutée au cours de la réaction.

2. Procédé selon la revendication 1 caractérisé en ce qu'on n'ajoute, au début de la réaction, qu'une partie du catalyseur, en l'espèce de 0,1 à 1 % en poids, et en ce qu'on ajoute régulièrement au cours de la réaction une quantité supplémentaire du catalyseur, en l'espèce de 0,9 à 5,4 % en poids.

3. Procédé selon la revendication 1 caractérisé en ce qu'on opère en présence de peroxy-esters aliphatiques et/ou de peroxydes de diacyles aliphatiques qui se décomposent à moitié en 1 heure à une température comprise entre 80 et 121 °C.

4. Procédé selon la revendication 1 caractérisé en ce qu'on polymérise un acide vinyl-phosphonique qui contient jusqu'à 30 % en poids d'acides phosphoniques et d'acide phosphorique ou d'esters monométhyliques de ces acides.

5. Application, dans des produits de nettoyage et des détergents, de copolymères acide vinyl-phosphonique/acide acrylique ou méthacrylique qui ont été préparés selon l'une quelconque des revendications précédentes.